# EUROPEAN PATENT APPLICATION

(11) **EP 4 567 996 A2**
(43) Date of publication of application: **11.06.2025**
(21) Application number: 24792888.0
(22) Date of filing: 29.03.2024
(51) Int. Cl.: H01M 50/383, H01M 50/204, H01M 50/342, H01M 50/222, H01M 50/249

(54) **BATTERY MODULE**

(30) Priority: 18.04.2023 KR 20230051028; 23.02.2024 KR 20240026771
(71) Applicant: LG Energy Solution, Ltd., Seoul 07335 (KR)
(72) Inventor: JEONG, Jae-Hong, Daejeon 34122 (KR); KO, Yoon-Oh, Daejeon 34122 (KR); PARK, Jin-Ju, Daejeon 34122 (KR); YOON, Young-Il, Daejeon 34122 (KR); JUNG, Hye-Mi, Daejeon 34122 (KR)
(74) Representative: Plasseraud IP
(86) International application number: PCT/KR2024/004077
(87) International publication number: WO 2024/219702

(57) **Abstract**

Disclosed is a battery module.

A battery module according to an embodiment of the present disclosure may include: a case having a space therein and a first venting hole formed on an upper surface thereof; a plurality of battery cells provided inside the case; a first cover configured to cover the upper surface of the case and having a second venting hole facing the first venting hole; and a second cover configured to cover the first cover and having a score line facing the second venting hole.

## Description

### TECHNICAL FIELD

The present disclosure relates to a battery module.

The present application claims priority to Korean Patent Application No. 10-2023-0051028 filed on April 18, 2023 and Korean Patent Application No. 10-2024-0026771 filed on February 23, 2024 in the Republic of Korea, the disclosures of which are incorporated herein by reference.

### BACKGROUND ART

As the demand for portable electronic products such as smartphones, tablet PCs, and smart watches increases significantly, and as electric vehicles become widespread, active research on batteries mounted to them, especially secondary batteries capable of being repeatedly charged and discharged, is underway.

Currently commercialized secondary batteries include nickel-cadmium batteries, nickel-hydrogen batteries, nickel-zinc batteries, lithium secondary batteries, and the like. Among of them, lithium secondary batteries are in the spotlight for their advantages of free charging and discharging due to almost no memory effect, a very low self-discharge rate, and a high energy density, compared to nickel-based secondary batteries.

Lithium secondary batteries use lithium-based oxides and carbon materials as positive and negative electrode active materials, respectively. The lithium secondary batteries include an electrode assembly in which the positive and negative electrode plates, which are respectively coated with the positive and negative electrode active materials, are disposed with a separator therebetween, and an exterior case, i.e., a battery case, that seals and stores the electrode assembly with an electrolyte.

In general, lithium secondary batteries may be classified, depending on the shape of the exterior case, into can-type secondary batteries in which the electrode assembly is stored in a metal may and pouch-type secondary batteries in which the electrode assembly is stored in a pouch of an aluminum laminate sheet.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case to form a battery module. In this case, each secondary battery included in the battery module may be referred to as a battery cell. In addition, multiple battery modules may be connected to each other to form a battery pack.

However, in the case where a battery pack includes multiple battery modules therein and where each battery module includes multiple battery cells, it may be vulnerable to a chain thermal reaction between the battery modules or between the battery cells. For example, if an event such as thermal runaway occurs inside one battery module, the thermal runaway needs to be prevented from transferring to other battery modules or other battery cells. If the propagation of thermal runaway between the battery modules or the battery cells fails to be properly suppressed, an event occurring in a specific battery module or battery cell may cause a chain thermal reaction in other battery modules or other battery cells, leading to explosion or fire and worsening the same.

In particular, if an event such as thermal runaway occurs in any one battery module, gas or flame may be randomly discharged to the outside. In this case, if the discharge of gas or flame is not properly controlled, the gas or flame will be discharged to other battery modules, causing a chain thermal reaction in other battery modules. In particular, a module terminal may be provided on the front side of the battery module, and for example, a configuration, such as a module bus-bar, to be electrically connected to another battery module or battery pack may be provided thereon. Therefore, if flame is discharged toward the front of the battery module, the module terminal may be damaged in the battery pack, causing electrical short circuits. In addition, other battery modules may exist in front of a battery module, so if flame is discharged toward the front of a specific battery module, the discharged flame may be directed to another battery module, making it easy for fire to spread between the battery modules.

If thermal propagation between the battery modules or battery cells is not properly controlled, the voltage of the battery module or battery pack may rapidly drop. In addition, this may cause sudden interruption of devices equipped with the battery modules or battery packs, resulting in unexpected damage. For example, if the voltage suddenly drops in the battery pack while the electric vehicle is driving, it is impossible to secure enough time to move the electric vehicle to a safe location.

In addition, if fire or explosion suddenly occurs due to failure to properly control thermal propagation between the battery modules or battery cells, the users are more likely to be injured. For example, when thermal runaway occurs in an electric vehicle, if enough time fails to be secured until a full-scale fire develops, occupants may not be able to escape safely.

### DISCLOSURE

### Technical Problem

The present disclosure has been designed to solve the problems of the related art, and therefore the present disclosure is directed to providing a battery module with an improved structure capable of appropriately controlling the discharge of flame or the like generated inside the battery module, and a battery pack and vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module including: a case having a space therein and a first venting hole formed on an upper surface thereof; a plurality of battery cells provided inside the case; a first cover configured to cover the upper surface of the case and having a second venting hole facing the first venting hole; and a second cover configured to cover the first cover and having a score line facing the second venting hole.

In addition, the score line may be configured to rupture when a thermal event occurs in the battery cell.

In addition, the score line may extend along the perimeter of the second venting hole.

In addition, the first cover may include a bridge configured to partition the second venting hole.

In addition, the bridge may support the second cover.

In addition, the second venting hole may be configured as a plurality of holes.

In addition, the second cover may be thicker than the first cover.

In addition, the score line may form a separation area.

In addition, the second venting hole may be formed to be smaller than the separation area.

In addition, the separation area may be formed to be larger than the first venting hole.

In addition, a plurality of first venting holes may be provided.

In addition, the first venting hole may face at least some of the plurality of battery cells.

In addition, the first cover may include a mica material.

In addition, the second cover may include a mica material.

In addition, according to another aspect of the present disclosure, there is provided a battery pack including the battery module according to the present disclosure.

In addition, according to another aspect of the present disclosure, there is provided a vehicle including the battery module according to the present disclosure.

### Advantageous Effects

According to at least one of the embodiments of the present disclosure, when gas or flame is generated inside the battery module, it is possible to appropriately control the discharge of the gas or flame.

According to at least one of the embodiments of the present disclosure, it is possible to improve the electrical safety of the battery pack.

According to at least one of the embodiments of the present disclosure, it is possible to suppress heat propagation.

According to at least one of the embodiments of the present disclosure, it is possible to suppress propagation of thermal events due to the flame or gas outside the battery module.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a drawing illustrating a battery module according to an embodiment of the present disclosure.
FIG. 2 is a drawing illustrating the battery module in FIG. 1 in which some elements are exploded.
FIG. 3 is a drawing illustrating the battery assembly in FIG. 2 in which some elements are exploded.
FIG. 4 is a cross-sectional view taken along line A-A' in FIG. 1.
FIG. 5 is a drawing illustrating the configuration of FIG. 4 when a thermal event occurs inside the battery module.
FIG. 6 is a drawing illustrating the configuration of FIG. 4 when a thermal event occurs outside the battery module.
FIG. 7 is a drawing illustrating a modified embodiment of FIG. 4.
FIG. 8 is a drawing illustrating a modified embodiment of the first cover in FIG. 2.
FIG. 9 is a drawing illustrating another modified embodiment of the first cover in FIG. 2.
FIG. 10 is a drawing illustrating another modified embodiment of the first cover in FIG. 2.
FIG. 11 is a drawing illustrating another modified embodiment of the first cover in FIG. 2.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

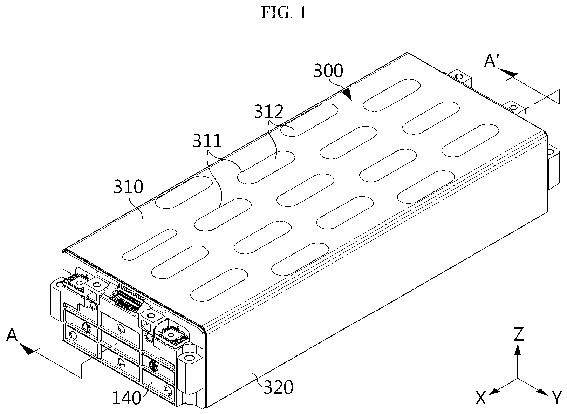

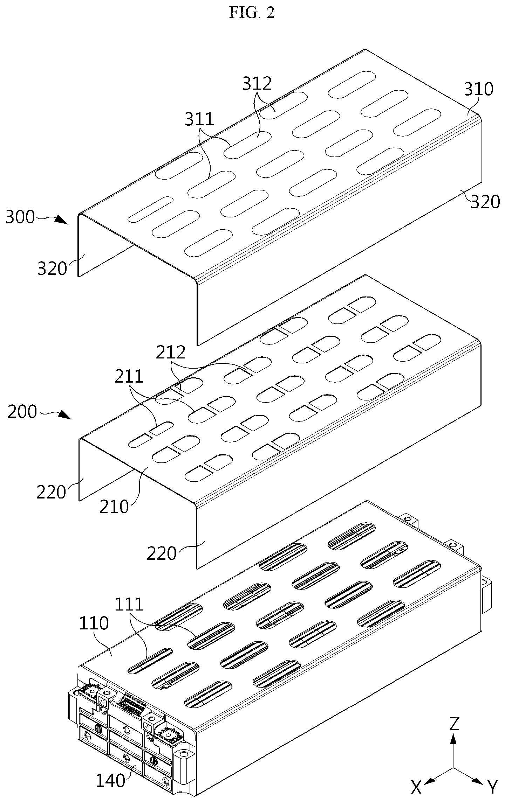

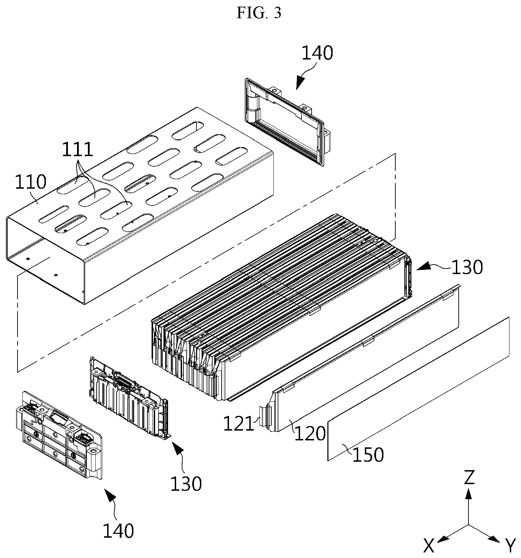

FIG. 1 is a drawing illustrating a battery module according to an embodiment of the present disclosure. FIG. 2 is a drawing illustrating the battery module in FIG. 1 in which some elements are exploded. FIG. 3 is a drawing illustrating the battery assembly in FIG. 2 in which some elements are exploded.

Referring to FIGS. 1 to 3, a battery module according to an embodiment of the present disclosure may include a case 110, a plurality of battery cells 120, a first cover 200, and a second cover 300.

The case 110 may have a cuboid shape. The case 110 may also be referred to as a frame 110. The case 110 may provide a space therein. The case 110 may have an upper surface, a lower surface, and a pair of side surfaces. In addition, the case 110 may have open front and end sides. The case 110 may have a first venting hole 111 on the upper surface. The first venting hole 111 may connect the inside and the outside of the case 110.

The plurality of battery cells 120 may be stacked in the left/right direction or the Y-axis direction. In this case, the battery cell 120 may indicate a secondary battery. The secondary battery may be equipped with an electrode assembly, an electrolyte, an electrode lead 121, and a battery case. In particular, the battery cell 120 may be a pouch-type secondary battery. Each battery cell 120 may extend in the front/back direction or the X-axis direction. The electrode lead 121 may protrude forward and backward from each battery cell 120.

The compression pads 150 may be disposed between a plurality of battery cells 120. The compression pads 150 may be disposed between at least some of the battery cells 120 and/or the outer side of the stack. For example, the compression pads 150 may be disposed between every four battery cells 120 stacked in the left/right direction.

The compression pad 150 may be made of an elastic material to absorb swelling of the battery cell 120. For example, the compression pad 150 may be made of a foam material such as polyurethane. Alternatively, the compression pad 150 may be made of a material capable of blocking heat or flame. For example, the compression pad 150 may be made of a heat-resistant or fire-retardant material such as silicon or mica.

The bus-bar frame assembly 130 may be provided at the front and rear of the plurality of battery cells 120, respectively. The bus-bar frame assembly 130 may be electrically connected to the electrode leads 121 of the plurality of battery cells 120.

A pair of end covers 140 may be coupled to the front and rear sides of the case 210, respectively. The pair of end covers 140 may cover the front and rear sides of the case 210. The end cover 140 may have a square shape.

The first cover 200 may cover the upper surface of the case 110. In addition, the first cover 200 may have a second venting hole 211 facing the first venting hole 111. The first venting hole 111 and the second venting hole 211 may face each other. In addition, the first venting hole 111 and the second venting hole 211 may have very similar sizes. The first cover 200 may be attached, fixed, coupled, or fastened to the upper surface of the case 110. In addition, the first cover 200 may include a first top part 210 and a pair of first side parts 220. The first top part 210 and the pair of first side parts 220 may each have a plate shape. In addition, the first top part 210 and the pair of first side parts 220 may be formed integrally. The first top part 210 may be attached, fixed, coupled, or fastened to the upper surface of the case 110. The pair of first side parts 220 may be attached, fixed, coupled, or fastened to a pair of side surfaces of the case 110, respectively.

The second cover 300 may cover the first cover 200. In addition, the second cover 300 may have a score line 311 facing the second venting hole 211. The second cover 300 may include a second top part 310 and a pair of second side parts 320. The second top part 310 and the pair of second side parts 320 may each have a plate shape. **In** addition, the second top part 310 and the pair of second side parts 320 may be formed integrally. The second top part 310 may be attached, fixed, coupled, or fastened to the upper surface of the first top part 210. The pair of second side parts 320 may be attached, fixed, coupled, or fastened to the pair of first side parts 220, respectively.

The score line 311 may be used as a term that encompasses or indicates a perforated line 311, a notching line 311, a cutting line 311, a shredding line 311, a tear line 311, or a separation line 311. The score line 311 may be configured to easily rupture by pressure applied to the second cover 300.

According to this configuration of the present disclosure, the thermal safety of the battery module may be improved. When a thermal event occurs inside the battery module, venting gas may pressurize the second cover 300 by passing through the first venting hole 111 and the second venting hole 211. The venting gas may push the score line 311 to separate at least a position of the second cover 300 or form a hole. As a result, the inside and the outside of the battery module may communicate each other, so that the venting gas may be discharged to the outside of the battery module.

In addition, according to this configuration of the present disclosure, the second cover 300 may prevent or block high-temperature gas or ignitable particles generated outside the battery module from flowing into the case 110. As a result, it is possible to block propagation of the thermal event to the battery cell 120 inside the case 110.

Referring to FIGS. 1 to 3, the score line 311 of the battery module according to an embodiment of the present disclosure may be configured to rupture for separation when a thermal event occurs in the battery cell 120.

According to this configuration of the present disclosure, the thermal safety of the battery module may be improved.

Referring to FIGS. 1 to 3, the score line 311 of the battery module according to an embodiment of the present disclosure may extend along the perimeter of the second venting hole 211. Alternatively, the score line 311 may be formed in the area facing the second venting hole 211.

According to this configuration of the present disclosure, the thermal safety of the battery module may be improved. When a thermal event occurs inside the battery module, the score line 311 may easily rupture. As a result, the venting gas may be easily discharged.

Referring to FIGS. 1 to 3, the score line 311 of the battery module according to an embodiment of the present disclosure may form a separation area 312. The separation area 312 may be an area surrounded by the score line 311.

According to this configuration of the present disclosure, the thermal safety of the battery module may be improved. When a thermal event occurs inside the battery module, the separation area 312 formed by the score line 311 may be completely separated from the second cover 300. As a result, the venting gas may be easily discharged.

Referring to FIGS. 1 to 3, the first cover 200 of the battery module according to an embodiment of the present disclosure may include a bridge 212. The bridge 212 may divide the second venting hole 211 into a plurality of holes 211a. The bridge 212 may be formed integrally with the first cover 200. In addition, the bridge 212 may be positioned between a plurality of holes 211a constituting the second venting hole 211. The bridge 212 may face the first venting hole 111. In addition, the bridge 212 may be in contact with the second cover 300.

According to this configuration of the present disclosure, the bridge 212 may improve the rigidity of the first cover 200. In addition, the bridge 212 may stably support the second cover 300. As a result, the bridge 212 may prevent the score line 311 of the second cover 300 from easily rupturing by high-temperature gas or ignitable particles generated outside the battery module. On the other hand, the score line 311 may not prevent the score line 311 of the second cover 300 from easily rupturing when a thermal event occurs inside the battery module.

Referring to FIGS. 1 to 3, a plurality of first venting holes 111 may be provided in the battery module according to an embodiment of the present disclosure. In addition, a plurality of second venting holes 211 may be provided and positioned to correspond one-to-one to the first venting holes 111. In addition, a plurality of score lines 311 may be provided and positioned to correspond one-to-one to the second venting holes 211.

According to this configuration of the present disclosure, the thermal safety of the battery module may be improved. The venting gas generated inside the battery module may be effectively discharged to the outside.

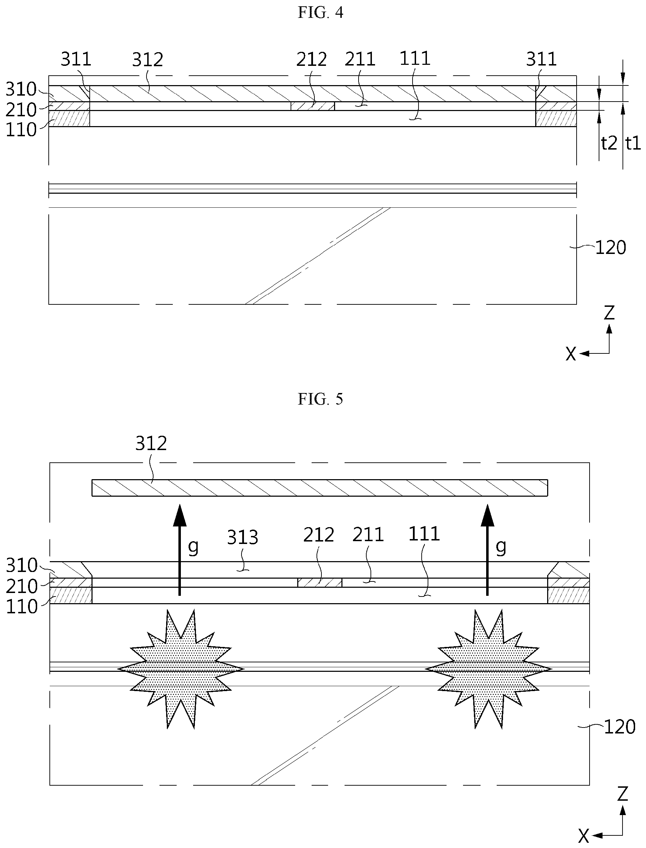

FIG. 4 is a cross-sectional view taken along line A-A' in FIG. 1. Referring to FIG. 4, the first venting hole 111 according to an embodiment of the present disclosure may face at least some of the plurality of battery cells 120. Alternatively, the first venting hole 111 may face at least some of the upper surfaces of the plurality of battery cells 120.

In addition, the second venting hole 211 may face at least some of the plurality of battery cells 120. Alternatively, the second venting hole 211 may face at least some of the upper surfaces of the plurality of battery cells 120.

In addition, the second cover 300 or the separation area 312 may face at least some of the plurality of battery cells 120. Alternatively, the second cover 300 or the separation area 312 may face at least some of the upper surfaces of the plurality of battery cells 120.

According to this configuration of the present disclosure, the thermal safety of the battery module may be improved. When a thermal event occurs, venting gas may be discharged through the upper side or upper surface of the battery cell 120. In addition, the venting gas may be discharged to the outside of the battery module through the first venting hole 111, the second venting hole 211, and the separation area 312.

Referring to FIGS. 1 to 4, the first cover 200 according to an embodiment of the present disclosure may include a heat-resistant material. For example, the first cover 200 may include a ceramic material such as mica.

According to this configuration of the present disclosure, the thermal safety of the battery module may be improved. The first cover 200 may stably maintain its shape even when exposed to high-temperature gas resulting from the occurrence of a thermal event.

Referring to FIGS. 1 to 4, the second cover 300 according to an embodiment of the present disclosure may include a heat-resistant material. For example, the second cover 300 may include a ceramic material such as mica.

According to this configuration of the present disclosure, the thermal safety of the battery module may be improved. The second cover 300 may stably maintain its shape even when exposed to high-temperature gas due to a thermal event.

Referring to FIGS. 1 to 4, the second cover 300 of the battery module according to an embodiment of the present disclosure may be thicker than the first cover 200. In addition, the second cover 300 may have a higher hardness than the first cover 200.

According to this configuration of the present disclosure, since the second cover 300 is thick, the battery module may have higher thermal resistance to flame or high-temperature gas generated from the outside.

If the second cover 300 has a low hardness, when venting gas is discharged from the inside of the battery module, the bonding state between the second cover 300 and the first cover 200 or the case 110 may not be maintained. As a result, a gap may be produced between the second cover 300 and the first cover 200 or between the second cover 300 and the case 110. In addition, high-temperature gas may be trapped in the gap, which may degrade the thermal stability of the battery module.

On the other hand, according to this configuration of the present disclosure, since the second cover 300 has a high hardness, when venting gas is discharged from the inside of the battery module, the bonding state of the first cover 200 or the case 110 may be stably maintained.

Referring to FIGS. 1 to 4, an adhesive member may be disposed between the first cover 200 and the case 110 of the battery module according to an embodiment of the present disclosure. In addition, an adhesive member may be disposed between the first cover 200 and the second cover 300. In addition, an insulating film may be disposed between the first cover 200 and the case 110. The insulating film may be made of an electrically insulating material such as plastic. For example, the insulating film may be made of a polyurethane material. The insulating film may be bonded to the case 110 and/or the first cover 200. Furthermore, the insulating film may have adhesive applied to both sides, thereby bonding the case 110 and the first cover 200 to each other.

FIG. 5 is a drawing illustrating the configuration of FIG. 4 when a thermal event occurs inside the battery module. Referring to FIG. 5, the separation area 312 of the battery module according to an embodiment of the present disclosure may be separated from the second cover 300 when a thermal event occurs. The separation area 312 may be separated along the score line 311. When the separation area 312 is separated, a third venting hole 313 may be formed in the second cover 300. The third venting hole 313 may face the first venting hole 111 and the second venting hole 211. In addition, the third venting hole 313 may be connected to the first venting hole 111 and the second venting hole 211. The venting gas g may sequentially pass through the first venting hole 111, the second venting hole 211, and the third venting hole 313 and may be discharged to the outside of the battery module.

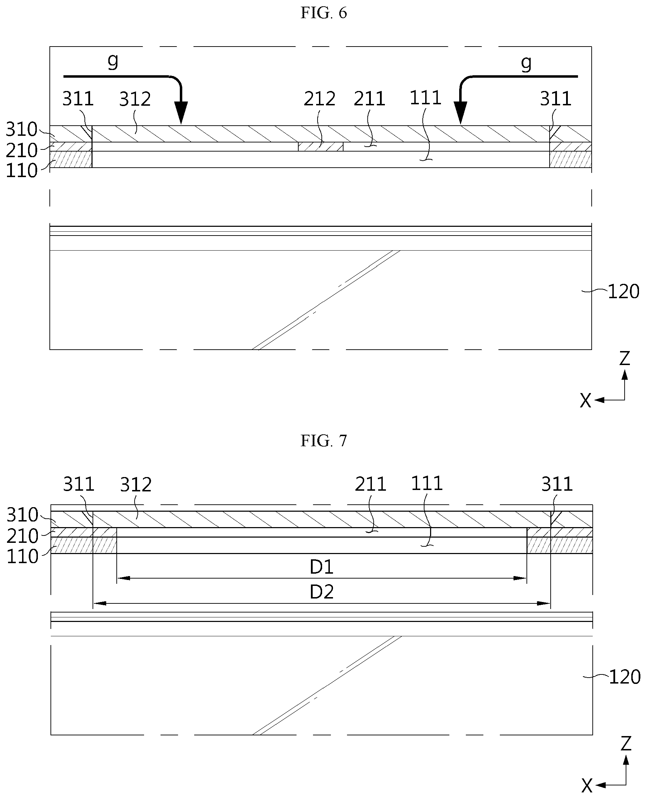

FIG. 6 is a drawing illustrating the configuration of FIG. 4 when a thermal event occurs outside the battery module. Referring to FIG. 6, the bridge 212 of the battery module according to an embodiment of the present disclosure may support the second cover 300. Alternatively, the bridge 212 may support the separation area 312. The separation area 312 may be pressurized by flames, ignitable particles, or venting gas g generated outside the battery module. In this case, the bridge 212 may come into contact with or support the lower surface of the separation area 312 to prevent the separation area 312 from being separated from the second cover 300.

According to this configuration of the present disclosure, the thermal safety of the battery module may be improved. The second cover 300 may prevent flame or venting gas from flowing into the case 110 from the outside. As a result, heat propagation into the battery module may be blocked.

FIG. 7 is a drawing illustrating a modified embodiment of FIG. 4. Referring to FIG. 7, the size of the second venting hole 211 of the battery module according to an embodiment of the present disclosure may be configured to be less than the size of the separation area 312. For example, the diameter D1 of the second venting hole 211 may be configured to be smaller than the diameter D2 of the separation area 312. In addition, the diameter D1 of the first venting hole 111 may be configured to be smaller than the diameter D2 of the separation area 312. The diameters D1 of the first venting hole 111 and the second venting hole 211 may be configured to be substantially the same.

Alternatively, the separation area 312 may be formed to be larger than the first venting hole 111. In addition, the separation area 312 may be formed to be larger than the second venting hole 211.

According to this configuration of the present disclosure, the first cover 200 may support the perimeter of the separation area 312. Therefore, the thermal safety of the battery module may be improved. The second cover 300 may prevent flame or venting gas from flowing into the case 110 from the outside. Therefore, heat propagation into the interior of the battery module may be blocked.

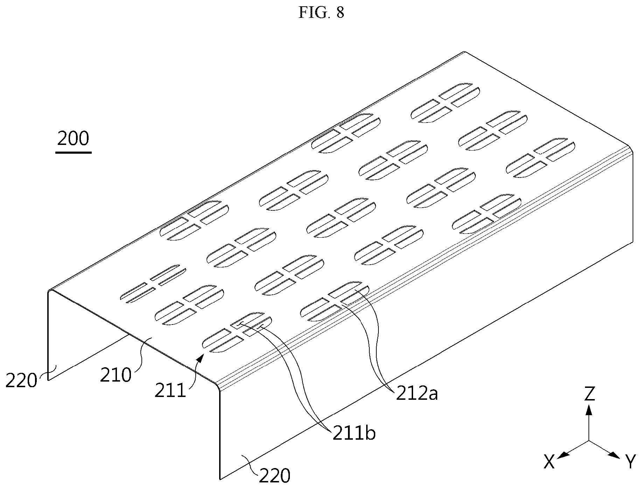

FIG. 8 is a drawing illustrating a modified embodiment of the first cover 200 in FIG. 2. Referring to FIG. 8, a plurality of second venting holes 211 may be provided in the battery module according to an embodiment of the present disclosure. In addition, each second venting hole 211 may be configured as a plurality of holes 211b. A plurality of bridges 212a may be provided to partition the second venting hole 211. For example, the bridge 212a may be configured to cross the hole. Therefore, the second venting hole 211 may be divided into four holes 211b.

According to this configuration of the present disclosure, the area of the bridge 212a supporting the second cover 300 may be increased. Therefore, the bridge 212a may support the second cover 300 more stably.

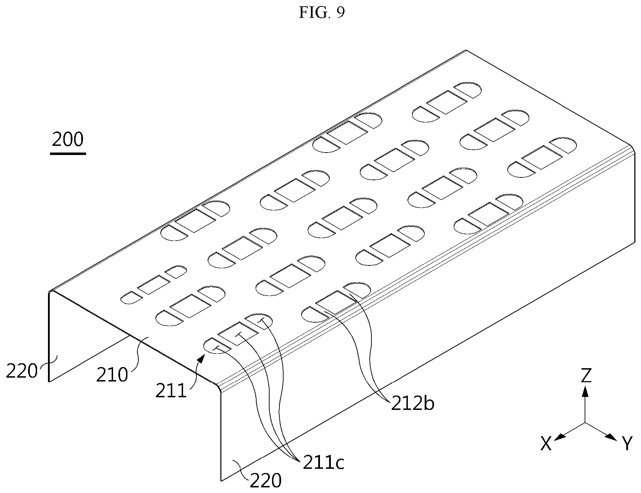

FIG. 9 is a drawing illustrating another modified embodiment of the first cover 200 in FIG. 2. Referring to FIG. 9, a plurality of second venting hole 211 may be provided in the battery module according to an embodiment of the present disclosure. In addition, each second venting holes 211 may be configured as a plurality of holes 211c. A plurality of bridges 212b may be provide to partition the second venting holes 211. For example, a pair of the bridge 212b may be provided so as to face each other. Therefore, the second venting hole 211 may be partitioned into three holes 211c.

According to this configuration of the present disclosure, the area of the bridge 212b supporting the second cover 300 may be increased. Therefore, the bridge 212b may support the second cover 300 more stably.

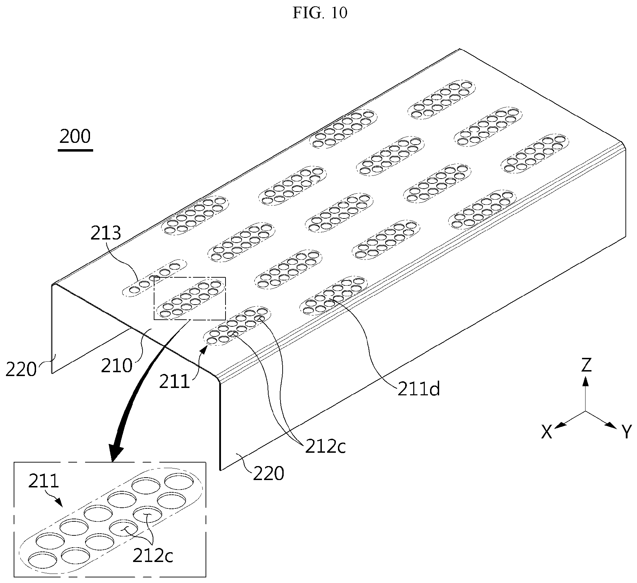

FIG. 10 is a drawing illustrating another modified embodiment of the first cover 200 in FIG. 2. Referring to FIG. 10, a plurality of second venting holes 211 may be provided in the battery module according to an embodiment of the present disclosure. In addition, each second venting hole 211 may be configured as a plurality of holes 211d. The plurality of holes 211d constituting the second venting hole 211 may be located within an opposing area 213. The opposing area 213 may be an area facing the separation area 312. The opposing area 213 and the separation area 312 may have substantially the same size and substantially the same shape. A portion, which divides the second venting hole 211 into a plurality of holes 211d, may be called a bridge 212c. For example, the bridge 212c may divide the second venting hole 211 into six holes 211d.

According to this configuration of the present disclosure, the area of the bridge 212c supporting the second cover 300 may be increased. Therefore, the bridge 212c may support the second cover 300 more stably.

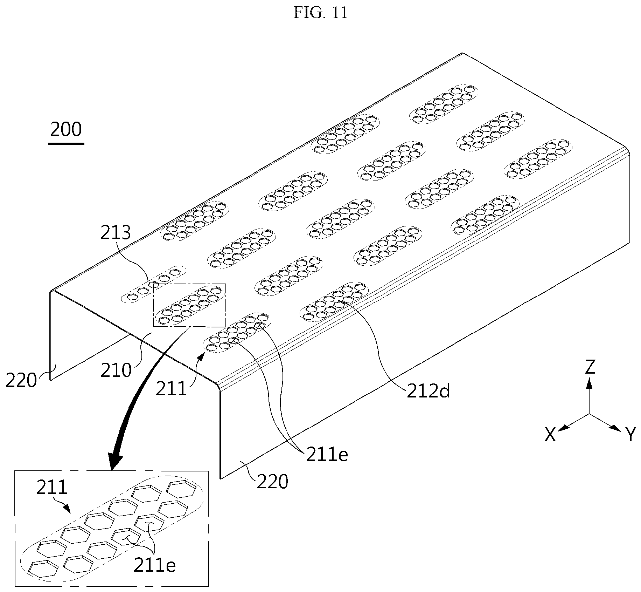

FIG. 11 is a drawing illustrating another modified embodiment of the first cover in FIG. 2. Referring to FIG. 11, a plurality of second venting holes 211 may be provided in the battery module according to an embodiment of the present disclosure. In addition, each second venting hole 211 may be configured as a plurality of holes 211e. The plurality of holes 211e constituting the second venting hole 211 may be located within the opposing area 213. The opposing area 213 may be an area facing the separation area 312. The opposing area 213 and the separation area 312 may have substantially the same size and substantially the same shape. A portion, which divides the second venting hole 211 into a plurality of holes 211e, may be called a bridge 212d. For example, the bridge 212d may divide the second venting hole 211 into six holes 211e. In addition, the plurality of holes 211e may form a honeycomb structure.

According to this configuration of the present disclosure, the area of the bridge 212d supporting the second cover 300 may increase. Therefore, the bridge 212d may support the second cover 300 more stably.

The battery pack according to the present disclosure may include one or more battery modules according to the present disclosure described above. For example, the battery pack according to the present disclosure may be configured to include a pack housing and a plurality of battery modules according to the present disclosure therein. In this case, if the battery module according to the present disclosure is stored, it is possible to obtain the excellent effect of preventing heat propagation between the battery modules and secure sufficient time for response or escape of users in an emergency situation such as thermal runaway.

In addition, the battery pack according to the present disclosure, in addition to the battery module, may further include various components known at the time of filing the present disclosure, such as a BMS, a bus-bar, a relay, a current sensor, and the like

Meanwhile, the components such as the BMS, the bus-bar, the relay, the current sensor, and the like may be included, as components, in the battery module according to the present disclosure. In this case, the components such as the BMS, the bus-bar, the relay, the current sensor, and the like may be provided inside the case 110. In this case, the battery module may be referred to as a battery pack, and the case 110 may be referred to as a pack housing. Furthermore, in this case, the battery module according to the present disclosure may be a cell-to-pack-type battery pack in which battery cells 120 are directly mounted in the pack housing.

The battery module according to the present disclosure may be applied to a vehicle such as an electric vehicle or a hybrid vehicle. That is, the vehicle according to the present disclosure may include the battery module according to the present disclosure or the battery pack according to the present disclosure. In addition, the vehicle according to the present disclosure may further include various other components included in the vehicle, in addition to the battery module or battery pack. For example, the vehicle according to the present disclosure may further include a car body, a motor, a control device such as an ECU (electronic control unit) or the like, in addition to the battery module according to the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery module comprising:
a case having a space therein and a first venting hole formed on an upper surface thereof;
a plurality of battery cells provided inside the case;
a first cover configured to cover the upper surface of the case and having a second venting hole facing the first venting hole; and
a second cover configured to cover the first cover and having a score line facing the second venting hole.

2. The battery module according to claim 1,
wherein the score line is configured to rupture when a thermal event occurs in the battery cell.

3. The battery module according to claim 1,
wherein the score line is configured to extend along the perimeter of the second venting hole.

4. The battery module according to claim 1,
wherein the first cover comprises a bridge configured to partition the second venting hole.

5. The battery module according to claim 1,
wherein the bridge is configured to support the second cover.

6. The battery module according to claim 1,
wherein the second venting hole is configured as a plurality of holes.

7. The battery module according to claim 1,
wherein the second cover is thicker than the first cover.

8. The battery module according to claim 1,
wherein the score line is configured to form a separation area.

9. The battery module according to claim 8,
wherein the second venting hole is formed to be smaller than the separation area.

10. The battery module according to claim 8,
wherein the separation area is formed to be larger than the first venting hole.

11. The battery module according to claim 1,
wherein a plurality of first venting holes are provided.

12. The battery module according to claim 1,
wherein the first venting hole is configured to face at least some of the plurality of battery cells.

13. The battery module according to claim 1,
wherein the first cover comprises a mica material.

14. The battery module according to claim 1,
wherein the second cover comprises a mica material.

15. A battery pack comprising the battery module according to any one of claims 1 to 14.

16. A vehicle comprising the battery module according to any one of claims 1 to 14.
